**Europäisches Patentamt**

(19) **European Patent Office**

**Office européen des brevets**

(11) **EP 1 254 307 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **01901166.7**

(22) Anmeldetag: **18.01.2001**

(51) Int Cl.[7]: **F01N 11/00**, F02D 41/02

(86) Internationale Anmeldenummer:
**PCT/EP2001/000541**

(87) Internationale Veröffentlichungsnummer:
**WO 2001/055566 (02.08.2001 Gazette 2001/31)**

(54) **VERFAHREN UND VORRICHTUNG ZUR ERMITTLUNG EINER NOx-SPEICHERKAPAZITÄT EINES NOx-SPEICHERKATALYSATORS**

METHOD AND DEVICE FOR DETECTING A NOx STORAGE CAPACITY OF A NOx STORAGE CATALYST

PROCEDE ET DISPOSITIF POUR DETERMINER LA CAPACITE D'ACCUMULATION DE NOx D'UN CATALYSEUR ACCUMULATEUR DE NOx

(84) Benannte Vertragsstaaten:
**DE ES FR GB IT SE**

(30) Priorität: **28.01.2000 DE 10003612**

(43) Veröffentlichungstag der Anmeldung:
**06.11.2002 Patentblatt 2002/45**

(73) Patentinhaber: **Volkswagen Aktiengesellschaft 38436 Wolfsburg (DE)**

(72) Erfinder:
- **HAHN, Hermann 30175 Hannover (DE)**
- **HINZE, Sören 38102 Braunschweig (DE)**
- **LANG, Axel 38304 Wolfenbüttel (DE)**

(74) Vertreter: **Schneider, Henry, Dipl.-Ing. et al Anwaltskanzlei Gulde Hengelhaupt Ziebig & Schneider Wallstrasse 58/59 10179 Berlin (DE)**

(56) Entgegenhaltungen:
EP-A- 0 814 248        EP-A- 0 936 349
EP-A- 1 053 777        WO-A-00/29729
DE-A- 19 744 409       DE-A- 19 852 240

- **PATENT ABSTRACTS OF JAPAN vol. 1995, no. 10, 30. November 1995 (1995-11-30) & JP 07 180535 A (FUJI HEAVY IND LTD), 18. Juli 1995 (1995-07-18)**

**Beschreibung**

Die Erfindung betrifft ein Verfahren und eine Vorrichtung zur Ermittlung einer $NO_x$-Speicherkapazität eines $NO_x$-Speicherkatalysators mit den im Oberbegriff des Anspruchs 1 und 14 genannten Merkmalen.

Es ist bekannt, eine Nachbehandlung von Abgasen von Verbrennungskraftmaschinen mit Katalysatorsystemen vorzunehmen, die in einem Abgaskanal einer Verbrennungskraftmaschine angeordnet sind. Überdies ist im Falle magerlauffähiger Verbrennungskraftmaschinen üblich, $NO_x$-Speicher in ein Katalysatorsystem zu integrieren ($NO_x$-Speicherkatalysator). Ein $NO_x$-Speicherkatalysator erfüllt dabei in der Regel die Rolle eines 3-Wege-Katalysators, indem er Kohlenmonoxid (CO) und unverbrannte oder nur teilweise verbrannte Kohlenwasserstoffe (HC) oxidativ mit Luftsauerstoff zu Kohlendioxid und Wasser umsetzt und gleichzeitig die Reduktion von Stickoxiden ($NO_x$) unter Wirkung der Reduktionsmittel CO und HC zu Stickstoff ($N_2$) fördert. Auf diese Weise können in einem sogenannten stöchiometrischen Abgas die Schadstoffe praktisch vollständig in weniger umweltrelevante Verbindungen umgesetzt werden. Wird die Verbrennungskraftmaschine jedoch in einem verbrauchsgünstigen Magermodus betrieben, das heißt bei Luftüberschuß, liegt $NO_x$ im Abgas gegenüber den Reduktionsmitteln CO und HC in einem stöchiometrischen Überschuß vor und kann daher nicht vollständig konvertiert werden. Der $NO_x$-Speicher absorbiert überschüssiges $NO_x$ in Form von Nitrat. Die $NO_x$-Einlagerung in den $NO_x$-Speicher wird durch eine $NO_x$-Speicherkapazität des Absorbers begrenzt. In wiederkehrenden Abständen müssen daher $NO_x$-Regenerationen durchgeführt werden, wobei der $NO_x$-Speicherkatalysator mit einem stöchiometrischen oder fetten Abgas ($\lambda \leq 1$) beaufschlagt wird.

Die $NO_x$-Speicherkapazität eines $NO_x$-Speicherkatalysators wird jedoch nicht nur durch die kontinuierliche $NO_x$-Einlagerung, sondern auch durch eine unerwünschte parallele Schwefeleinlagerung herabgesetzt. Der in Form von Sulfat eingelagerte Schwefel kann zudem durch eine sogenannte Sulfatkornbildung eine irreversible Schädigung von Speicher und Katalysator hervorrufen. Es ist somit notwendig, den $NO_x$-Speicherkatalysator in periodischen Abständen einer Entschwefelungsmaßnahme zu unterziehen, die wiederum die Beaufschlagung mit einer fetten Abgasatmosphäre sowie eine Katalysatortemperatur von über 600 °C umfaßt.

Es ist ferner bekannt, den Betrieb von $NO_x$-Speicherkatalysatoren, insbesondere ihre Regeneration, mit nachgeschalteten $NO_x$-Sensoren, die eine $NO_x$-Konzentration im Abgas erfassen, zu regeln. So beschreibt die EP 0 936 349 A ein Verfahren zur Bestimmung einer Schädigung eines $NO_x$-Katalysators, wobei eine zeitliche Änderung der stromab des $NO_x$-Katalysators gemessenen $NO_x$-Konzentration nach einer fetten Betriebsphase der Verbrennungskraftmaschine ermittelt und ausgewertet wird. Insbesondere wird die Steigung des ansteigenden $NO_x$-Sensorsignals zu mehreren Zeitpunkten bestimmt und gemittelt und der Mittelwert mit einem Referenzwert zur Bestimmung der Schädigung verglichen. Nachteilig an den bekannten Verfahren ist, daß auf Basis momentaner $NO_x$-Konzentrationen im Abgas beziehungsweise momentaner Änderungen der $NO_x$-Konzentrationen keine oder nur sehr ungenaue Aussagen über eine tatsächliche $NO_x$-Speicherkapazität des $NO_x$-Speicherkatalysators möglich sind. Mangels einer exakten Kenntnis der $NO_x$-Speicherkapazität des Katalysators fehlte es bislang an der Möglichkeit, den Zeitpunkt einer Entschwefelungsnotwendigkeit exakt zu bestimmen, irreversible Schädigungen des Katalysators zu erkennen oder auch andere Verfahren zu sperren, die auf eine hohe $NO_x$-Speicheraktivität des Katalysators angewiesen sind.

Aus der älteren Anmeldung WO 00/29729 ist ein Diagnoseverfahren bekannt, bei dem ein $NO_x$-Speicherwirkungsgrad eines $NO_x$-Speicherkatalysators in Abhängigkeit von während vorgegebener Diagnoseintervalle integrierten $NO_x$-Massenströmen vor und nach dem Speicherkatalysator ermittelt wird, wobei die $NO_x$-Massenströme aus den gemessenen $NO_x$-Konzentrationen bestimmt werden. Der Speicherwirkungsgrad wird nachfolgend mit einem vorbestimmten Schwellenwert verglichen, bei dessen Überschreitung ein Katalysatordefekt erkannt wird.

Aufgabe der vorliegenden Erfindung ist es, ein Verfahren und eine Vorrichtung vorzuschlagen, mit deren Hilfe eine $NO_x$-Speicherkapazität eines $NO_x$-Speicherkatalysators mit hoher Genauigkeit ermittelt werden kann.

Erfindungsgemäß wird diese Aufgabe durch die in den unabhängigen Ansprüchen 1 und 14 genannten Merkmale gelöst. Indem durch Integration einer stromab des $NO_x$-Speicherkatalysators gemessenen $NO_x$-Konzentration während der Daner einer Magerphase mindestens eine für die $NO_x$-Speicherkapazität des $NO_x$-Speicherkatalysators kennzeichnende Ist-Kenngröße berechnet wird, kann mit einer höheren Genauigkeit auf eine vorliegende $NO_x$-Speicherkapazität des Katalysators geschlossen werden, als es aufgrund einer gemessenen momentanen $NO_x$-Konzentration hinter dem Speicherkatalysator allein möglich ist. Es ist ferner vorgesehen, die für den $NO_x$-Speicherkatalysator kennzeichnende Kenngröße mit einer entsprechenden Soll-Kenngröße, die für einen theoretischen schwefelfreien und ungeschädigten $NO_x$-Speicherkatalysator modelliert wird, zu vergleichen. Hierdurch wird ein Bewertungsmaßstab für den Zustand des $NO_x$-Speicherkatalysators geschaffen.

Die erfindungsgemäße Vorrichtung sieht Mittel vor, mit denen die beschriebenen Verfahrensschritte ausführbar sind. Diese Mittel umfassen vorzugsweise eine Steuereinheit, in der die Prozedur zur Ermittlung einer $NO_x$-Speicherkapazität des $NO_x$-Speicherkatalysators in digitaler Form hinterlegt ist. Die Steuereinheit ist vorteilhafterweise in ein Motorsteuergerät integriert.

Gemäß einer vorteilhaften Ausgestaltung der Erfindung wird aus einem Verhältnis der Ist-Kenngröße des $NO_x$-Speicherkatalysators und der modellierten Soll-Kenngröße ein Gütefaktor des $NO_x$-Speicherkatalysators berechnet. Es ist weiterhin vorgesehen, bei Überschreitung eines vorgebbaren Schwellenwertes durch den so ermittelten Gütefaktor (GFSK) eine Entschwefelung auszulösen. Außer einer Entschwefelung können jedoch ebenso gut bei entsprechender Schwellenvorgabe andere Maßnahmen vorgesehen sein, beispielsweise eine Sperrung eines Magerbetriebes oder die Registrierung eines Katalysatorfehlers.

Gemäß einer bevorzugten Ausführungsform der Erfindung beginnt die Integration der $NO_x$-Konzentration hinter dem $NO_x$-Speicherkatalysator mit einem Beginn einer mageren Betriebsphase, vorzugsweise nach einer erfolgreich abgeschlossenen $NO_x$-Regeneration oder einer Entschwefelung. Unter diesen Umständen kann von einem $NO_x$-freien Katalysator ausgegangen werden.

Es ist ferner bevorzugt vorgesehen, daß der Gütefaktor des $NO_x$-Speicherkatalysators am Ende einer mageren Betriebsphase der Verbrennungskraftmaschine, insbesondere vor einer $NO_x$-Regeneration des Katalysators, bestimmt wird und mit dem Schwellenwert verglichen wird. Die Bestimmung des Gütefaktors und der Vergleich mit dem Schwellenwert kann von einer ungestörten $NO_x$-Einlagerung während der vorausgegangenen Magerphase der Verbrennungskraftmaschine abhängig gemacht werden, da das Beladungsmodell bei einem sehr dynamischen Betrieb ungenauer wird. Die Bestimmung und Auswertung des Gütefaktors kann beispielsweise unterbunden werden, wenn in der vorausgegangenen Magerphase kurzzeitig in einen stöchiometrischen Betrieb geschaltet wurde, eine Schubabschaltung erfolgte oder extreme Laständerungen stattfanden. Ebenso kann es sinnvoll sein, einen Temperaturbereich des Katalysators vorzugeben, in dem eine zufriedenstellende $NO_x$-Einlagerung möglich ist.

Entsprechend einer bevorzugten Ausgestaltung wird als eine erste Ist-Kenngröße ein integraler $NO_x$-Durchbruch ermittelt, indem die stromab des $NO_x$-Speicherkatalysators gemessene $NO_x$-Konzentration, beispielsweise während einer Magerphase, aufintegriert wird. Der $NO_x$-Durchbruch gibt demnach eine $NO_x$-Menge an, die den Katalysator in dem betreffenden Meßintervall passiert hat. Als eine zweite Ist-Kenngröße wird eine $NO_x$-Beladung des $NO_x$-Speicherkatalysators aus einer Differenz einer $NO_x$-Rohemission der Verbrennungskraftmaschine, also der $NO_x$-Eingangsmenge, und des integralen $NO_x$-Durchbruches berechnet. Die $NO_x$-Rohemission kann entweder durch Integration einer vor dem $NO_x$-Speicherkatalysator mit einer zweiten $NO_x$-Sonde gemessenen $NO_x$-Konzentration ermittelt werden oder anhand aktueller Betriebsparameter der Verbrennungskraftmaschine mit guter Genauigkeit berechnet werden.

Es ist ferner vorgesehen, daß eine modellierte $NO_x$-Beladung gemäß einem theoretischen Beladungsmodell in Abhängigkeit der $NO_x$-Rohemission der Verbrennungskraftmaschine als eine Soll-Kenngröße berechnet wird. Dabei setzt das Beladungsmodell einen schwefelfreien und ungeschädigten $NO_x$-Speicherkatalysator voraus. Die modellierte $NO_x$-Beladung entspricht somit einer in einen idealen $NO_x$-Speicherkatalysator theoretisch eingelagerten $NO_x$-Menge. Die Berechnung eines modellierten $NO_x$-Durchbruches als eine weitere Soll-Kenngröße ergibt sich dann aus einer Differenz der besagten $NO_x$-Rohemission der Verbrennungskraftmaschine und der nach dem theoretischen Beladungsmodell modellierten $NO_x$-Beladung.

Für die Bestimmung eines Gütefaktors aus den genannten Ist-Kenngrößen des $NO_x$-Speicherkatalysators und den Soll-Kenngrößen des idealen Speicherkatalysators ergeben sich verschiedene Möglichkeiten. Gemäß einer bevorzugten Ausgestaltung wird ein erster Gütefaktor aus dem Verhältnis der ermittelten $NO_x$-Beladung des $NO_x$-Speicherkatalysators und der modellierten $NO_x$-Beladung berechnet. Nach einer weiteren vorteilhaften Ausgestaltung ist ein zweiter Gütefaktor das Verhältnis des modellierten $NO_x$-Durchbruches zu dem gemessenen $NO_x$-Durchbruch.

Weitere vorteilhafte Ausgestaltungen sind Gegenstand der übrigen Unteransprüche.

Die Erfindung wird nachfolgend in Ausführungsbeispielen anhand der zugehörigen Zeichnungen näher erläutert. Es zeigen:

Figur 1 eine schematische Darstellung einer Anordnung einer Verbrennungskraftmaschine mit einem $NO_x$-Speicherkatalysator;

Figur 2 zeitliche Verläufe integraler Ist- und Soll-Kenngrößen während einer Magerphase einer Verbrennungskraftmaschine und

Figur 3 zeitliche Verläufe einer modellierten $NO_x$-Beladung und einer gemessenen $NO_x$-Beladung über einen mehrere Magerphasen umfassenden Zeitraum.

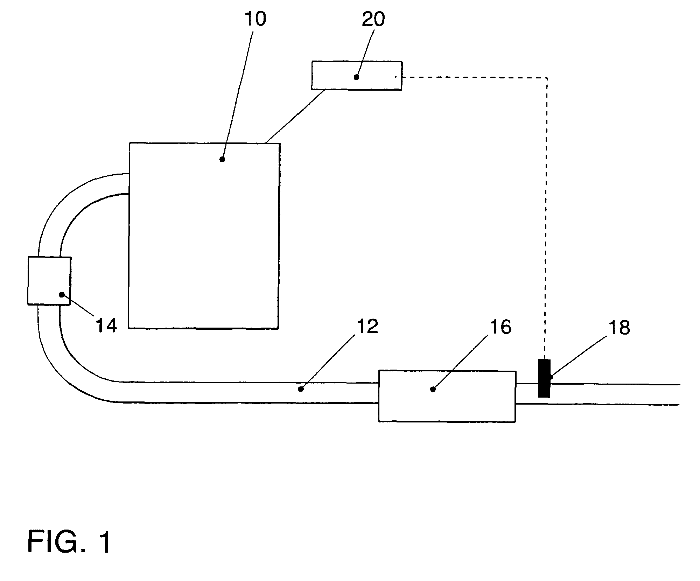

In Figur 1 ist eine Verbrennungskraftmaschine 10 und ein dieser zugeordneter Abgaskanal 12 in schematischer Weise dargestellt. In Strömungsrichtung eines die Verbrennungskraftmaschine 10 verlassenden Abgases ist zunächst ein optionaler Vorkatalysator 14 und nachfolgend ein $NO_x$-Speicherkatalysator 16 in dem Abgaskanal 12 angeordnet. Stromabwärts des $NO_x$-Speicherkatalysators 16 befindet sich eine als $NO_x$-Sensor 18 ausgestaltete Meßeinrichtung, die in Abhängigkeit einer $NO_x$-Konzentration im Abgas hinter dem $NO_x$-Speicherkatalysator 16 ein Signal an eine Steuereinheit 20 weiterleitet. Der Abgaskanal 12 kann weitere, hier nicht dargestellte Meßeinrichtungen beherbergen, deren Signale ebenfalls Eingang in die Steuereinheit 20 finden. Dies können etwa Lambdasonden, weitere $NO_x$-Sensoren, Druck- oder Temperaturfühler sein. Ferner werden aktuelle Betriebsparameter der Verbrennungskraftmaschine 10, beispielsweise eine Drehzahl und eine Motorlast, an die Steuereinheit 20 übermittelt. Die Steuereinheit 20 digitalisiert alle eingehenden Signale und wertet diese gemäß abgelegter Algorithmen aus. Ferner steuert die Steuereinheit 20 die Verbrennungskraftmaschine 10 in Abhängigkeit der erfaßten beziehungsweise berechneten Parameter, wie nachfolgend im einzelnen dargestellt wird.

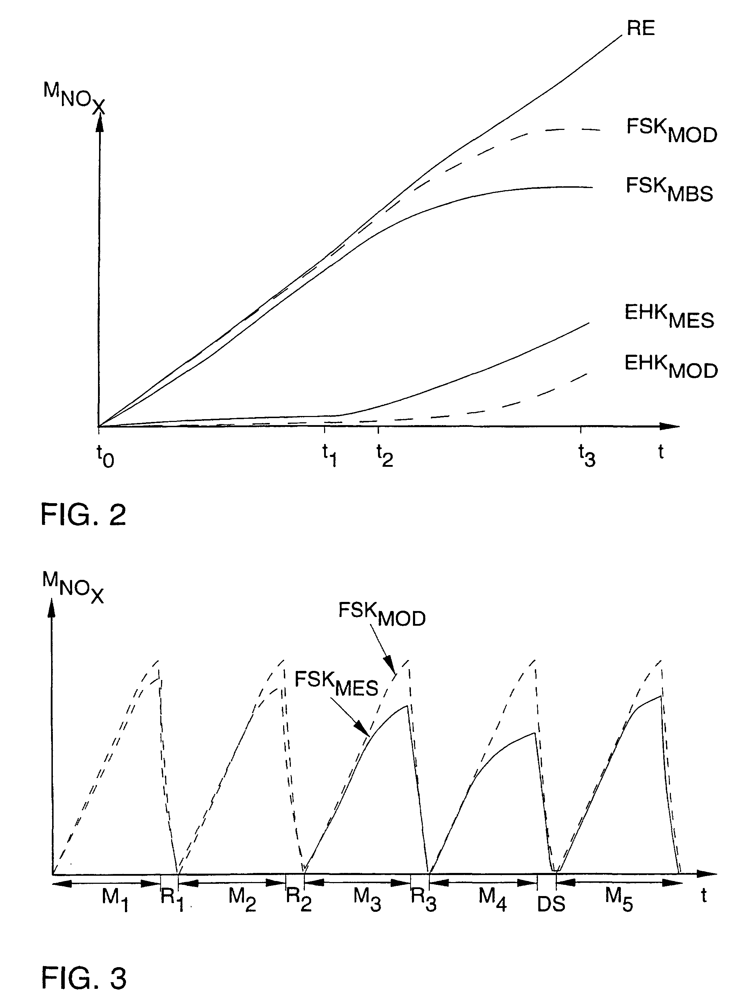

Figur 2 stellt in vereinfachter Weise Verläufe der erfindungsgemäßen integraien ist- und Soll-Kenngrößen während der Dauer einer Magerphase der Verbrennungskraftmaschine 10 dar. Selbstverständlich zeigt eine Rohemission RE im realen Betrieb entsprechend einem veränderlichen Betriebsmodus der Verbrennungskraftmaschine 10 einen komplexeren Verlauf als den dargestellten. Da es sich um eine integrale Größe handelt, kann ihre Steigerung jedoch nie negativ werden. Die Rohemission RE der Verbrennungskraftmaschine 10 kann durch eine vor dem $NO_x$-Speicherkatalysator 16 angeordnete $NO_x$-Sonde erfaßt werden, indem die so ermittelte $NO_x$-Konzentration von der Steuereinheit 20 kontinuierlich aufintegriert wird. Sie kann jedoch ebenso auf der Grundlage aktueller Betriebsparameter der Verbrennungskraftmaschine (Luft-Kraftstoff-Gemisch, Drehzahl, Motorlast etc.) von der Steuereinheit 20 mit hinreichender Genauigkeit berechnet werden. Die $NO_x$-Rohemission RE der Verbrennungskraftmaschine 10 ist hier vereinfacht als eine Gerade dargestellt. Der gemessene $NO_x$-Durchbruch $EHK_{MES}$ wird ebenfalls von der Steuereinheit 20 durch kontinuierliche Integration der durch den $NO_x$-Sensor 18 gemessenen $NO_x$-Konzentration hinter dem $NO_x$-Speicherkatalysator 16 berechnet. Die "gemessene" $NO_x$-Beladung $FSK_{MES}$ des $NO_x$-Speicherkatalysators 16 ergibt sich aus der Differenz der Rohemission RE und dem gemessenen $NO_x$-Durchbruch $EHK_{MES}$ gemäß der Formel $FSK_{MES}$ = $RE-EHK_{MES}$. Zu Beginn einer Magerphase der Verbrennungskraftmaschine 10 zum Zeitpunkt to nehmen alle Kenngrößen den Wert 0 an. Die $NO_x$-Beladung $FSK_{MES}$ des $NO_x$-Speicherkatalysators 16 entspricht etwa bis zu einem Zeitpunkt $t_1$ der Rohemission RE. Bis zu diesem Zeitpunkt ist der $NO_x$-Speicherkatalysator 16 in der Lage, die gesamte emittierte $NO_x$-Masse RE annähernd vollständig einzulagern. Dementsprechend wird bis zum Zeitpunkt $t_1$ praktisch kein $NO_x$-Durchbruch $EHK_{MES}$ hinter dem $NO_x$-Speicherkatalysator 16 registriert, so daß diese Kenngröße bei nahe 0 verharrt. Ungefähr zum Zeitpunkt $t_1$ beginnt die $NO_x$-Speicheraktivität des $NO_x$-Speicherkatalysators 16 einzubrechen. Die Beladung $FSK_{MES}$ steigt zunehmend flacher an, um sich einem Sättigungswert zu nähern. Gleichzeitig steigt die $NO_x$-Emission $EHK_{MES}$ hinter dem $NO_x$-Speicherkatalysator 16 an.

Wie bereits geschildert, werden diese Ist-Kennwerte $EHK_{MES}$, $FSK_{MES}$ des $NO_x$-Speicherkatalysators 16 mit den theoretischen Soll-Kennwerten eines schwefelfreien und ungeschädigten Speicherkatalysators verglichen. Hierfür berechnet die Steuereinheit 20 in Abhängigkeit von der $NO_x$-Rohemission RE nach einem abgespeicherten Beladungsmodell eine theoretische $NO_x$-Beladung $FSK_{MOD}$. Aus der Differenz der Rohemission RE und der theoretischen $NO_x$-Beladung $FSK_{MOD}$ ergibt sich wiederum der Soll-Kennwert des modellierten $NO_x$-Durchbruches $EHK_{MOD}$ hinter dem $NO_x$-Speicherkatalysator 16 gemäß der Gleichung $EHK_{MOD}$ = $RE-FSK_{MOD}$. Die Verläufe der Soll-Kenngrößen $FSK_{MOD}$ und $EHK_{MOD}$ ähneln qualitativ den Ist-Kenngrößen $FSK_{MES}$ und $EHK_{MES}$. Die modellierte $NO_x$-Beladung $FSK_{MOD}$ entspricht anfänglich der Rohemission RE der Verbrennungskraftmaschine 10 und beginnt etwa zu einem Zeitpunkt $t_2$ langsam abzuflachen und sich einem maximalen Beladungsgrenzwert zu nähern. Die maximale $NO_x$-Beladung $FSK_{MOD}$ des schwefelfreien, ungeschädigten $NO_x$-Katalysators ist größer als die maximale Beladung $FSK_{MES}$ des Katalysators 18. Die Differenz zwischen beiden ist auf eine Schwefelvergiftung und/oder eine irreversible Schädigung, beispielsweise einer thermischen Schädigung des Katalysators 16, zurückzuführen. Entsprechend der höheren Speicherkapazität des theoretischen Katalysators setzt auch der modellierte $NO_x$-Durchbruch $EHK_{MOD}$ hinter dem Katalysator, verglichen mit dem tatsächlichen $NO_x$-Speicherkatalysator 16, zu einem späteren Zeitpunkt $t_2$ ein.

Am Ende der Magerphase zum Zeitpunkt $t_3$ erfolgt eine Bewertung der Speicherkapazität des $NO_x$-Speicherkatalysators 16, indem aus mindestens einer Ist-Kenngröße des $NO_x$-Speicherkatalysators 16 und mindestens einer Soll-Kenngröße ein Gütefaktor GFSK berechnet und mit einem Schwellwert SW abgeglichen wird. Zum Beispiel kann durch Bezug der Ist-Beladung $FSK_{MES}$ auf die Soll-Beladung $FSK_{MOD}$ der Gütefaktor 1 GFSK1 gemäß

$$GFSK_1 = \frac{FSK_{MES}}{FSK_{MOD}}$$

berechnet werden. Ebenso können die $NO_x$-Soll- und Ist-Durchbrüche $EHK_{MOD}$ und $EHK_{MES}$ zur Bewertung herangezogen werden, gemäß

$$GFSK_2 = \frac{EHK_{MOD}}{EHK_{MES}}.$$

Optional ist die Bewertung des $NO_x$-Speicherkatalysators 16 auch durch Bezug der emittierten $NO_x$-Menge EHK auf die jeweils eingespeicherte $NO_x$-Menge FSK möglich. Beispielsweise können die Gütefaktoren GFSK 3 und GFSK 4 gemäß

$$GFSK_3 = \frac{1 - \dfrac{EHK_{MES}}{FSK_{MES}}}{1 - \dfrac{EHK_{MOD}}{FSK_{MOD}}}$$

und

$$GFSK_4 = \frac{1 - \dfrac{EHK_{MES} + 1}{FSK_{MES} + 1}}{1 - \dfrac{EHK_{MOD}}{FSK_{MOD}}}$$

gebildet werden. Der Vorteil liegt hierbei in einer genaueren Bewertung des tatsächlichen Wirkungsgrades der $NO_X$-Einlagerung sowie in einem größeren Auflösungsbereich des berechneten Faktors. Dabei hat der Gütefaktor $GFSK_4$ gegenüber $GFSK_3$ den Vorteil, eine Division durch Null zu vermeiden, wenn in einem Extremfall keine Beladung des $NO_X$-Speicherkatalysators 16 erfolgt.

Figur 3 stellt zeitliche Verläufe der modellierten $NO_x$-Beladung $FSK_{MOD}$ (unterbrochene Linien) und die gemessene $NO_x$-Beladung $FSK_{MES}$ des $NO_x$-Speicherkatalysators 16 (durchgezogene Linien) über mehrere Magerphasen M und mehrere Regenerationsphasen R dar. Während der ersten Magerphase $M_1$ ähnelt der Verlauf der Ist-Beladung $FSK_{MES}$ des noch verhältnismäßig frischen $NO_x$-Speicherkatalysators 16 dem Verlauf der Soll-Beladung $FSK_{MOD}$. Am Ende der ersten Magerphase $M_1$ erfolgt die erste $NO_x$-Regeneration $R_1$, so daß beide Werte auf 0 abfallen. Während die modellierte $NO_x$-Beladung $FSK_{MOD}$ in den folgenden Magerund Regenerationszyklen praktisch immer den gleichen Verlauf zeigt, erreicht die $NO_x$-Beladung $FSK_{MES}$ des aktuellen Katalysators 16 zunehmend niedrigere Beladungswerte. Dieser Aktivitätseinbruch ist auf eine zunehmende Schwefelvergiftung des $NO_x$-Speicherkatalysators 16 und/oder eine thermische Schädigung zurückzuführen. Am Ende jeder Magerphase M erfolgt erfindungsgemäß die Bewertung des Katalysatorzustandes, indem beispielsweise der Gütefaktor GFSK 1 berechnet und mit einem vorgebbaren Schwellenwert verglichen wird. Am Ende der vierten Magerphase $M_4$ weicht die Ist-Beladung $FSK_{MES}$ von der Sollbeladung $FSK_{MOD}$ so stark ab, daß der Gütefaktor GFSK 1 den Schwellenwert unterschreitet. Infolgedessen wird eine Entschwefelung DS eingeleitet, indem die Steuereinheit 20 mindestens einen Betriebsparameter der Verbrennungskraftmaschine 10 beeinflußt. Beispielsweise stellt sie ein fettes Luft-Kraftstoff-Gemisch ein und regelt die Temperatur des $NO_x$-Speicherkatalysators 16 hoch. Nach Beendigung der Entschwefelung DS erreicht der Verlauf der Ist-Beladung $FSK_{MES}$ wieder fast den theoretischen Wert $FSK_{MOD}$. Die Differenz zwischen beiden Werten kann nun auf eine irreversible Schädigung des $NO_x$-Speicherkatalysators 16 zurückgeführt werden.

## Patentansprüche

1. Verfahren zur Ermittlung einer $NO_x$-Speicherkapazität eines in einem Abgaskanal (12) einer Verbrennungskraftmaschine (10) angeordneten $NO_x$-Speicherkatalysators (16) mit einer stromab des $NO_x$-Speicherkatalysators (16) angeordneten $NO_x$-empfindlichen Messeinrichtung (18), wobei eine stromab des $NO_x$-Speicherkatalysators (16) gemessene $NO_x$-Konzentration während der Daner einer Magerphase integriert wird, **dadurch gekennzeichnet, dass** mindestens eine für die $NO_x$-Speicherkapazität des $NO_x$-Speicherkatalysators (16) kennzeichnende Ist-Kenngröße, welche die integrierte $NO_x$-Konzentration und/oder eine von dieser abgeleitete Größe ist, mit mindestens einer entsprechenden, für einen schwefelfreien und ungeschädigten $NO_x$-Speicherkatalysator modellierten Soll-Kenngröße verglichen wird.

2. Verfahren nach Anspruch 1, **dadurch gekennzeichnet, dass** aus einem Verhältnis der mindestens einen Ist-Kenngröße des $NO_x$-Speicherkatalysators (16) und der mindestens einen modellierten Soll-Kenngröße ein Gütefaktor (GFSK) des $NO_x$-Speicherkatalysators (16) berechnet wird.

3. Verfahren nach Anspruch 2, **dadurch gekennzeichnet, dass** bei Erreichen eines vorgebbaren Schwellenwertes durch den Gütefaktor (GFSK) eine Entschwefelung ausgelöst wird.

4. Verfahren nach einem der vorhergehenden Ansprüche, **dadurch gekennzeichnet, dass** die Integration der $NO_x$-Konzentration hinter dem $NO_x$-Speicherkatalysator (16) mit einem Beginn einer mageren Betriebsphase der Verbrennungskraftmaschine (10) beginnt.

5. Verfahren nach Anspruch 2, **dadurch gekennzeichnet, dass** die Bestimmung des Gütefaktors (GFSK) und der Vergleich mit dem Schwellenwert (SW) am Ende einer mageren Betriebsphase der Verbrennungskraftmaschine (10) erfolgt.

6. Verfahren nach Anspruch 5, **dadurch gekennzeichnet, dass** die Bestimmung des Gütefaktors (GFSK) und der Vergleich mit dem Schwellenwert am Ende einer mageren Betriebsphase der Verbrennungskraftmaschine (10) nur erfolgt, wenn in der vorausgegangenen Magerphase eine ungestörte $NO_x$-Einlagerung möglich war.

7. Verfahren nach einem der vorhergehenden Ansprüche, **dadurch gekennzeichnet, dass** als eine erste Ist-Kenngröße des NO$_x$-Speicherkatalysators (16) ein integraler NO$_x$-Durchbruch (EHK$_{MES}$) durch Integration der stromab des NO$_x$-Speicherkatalysators (16) gemessenen NO$_x$-Konzentration berechnet wird.

8. Verfahren nach einem der vorhergehenden Ansprüche, **dadurch gekennzeichnet, dass** als eine zweite Ist-Kenngröße eine NO$_x$-Beladung (FSK$_{MES}$) des NO$_x$-Speicherkatalysators (16) aus einer Differenz einer NO$_x$-Rohemission (RE) der Verbrennungskraftmaschine (10) und des integralen NO$_x$-Durchbruches (EHK$_{MES}$) berechnet wird.

9. Verfahren nach einem der vorhergehenden Ansprüche, **dadurch gekennzeichnet, dass** eine modellierte NO$_x$-Beladung (FSK$_{MOD}$) gemäß einem theoretischen Beladungsmodell für einen schwefelfreien und ungeschädigten NO$_x$-Speicherkatalysator in Abhängigkeit der NO$_x$-Rohemission (RE) der Verbrennungskraftmaschine (10) als eine Soll-Kenngröße berechnet wird.

10. Verfahren nach einem der vorhergehenden Ansprüche, **dadurch gekennzeichnet, dass** ein modellierter NO$_x$-Durchbruch (EHK$_{MOD}$) für einen schwefelfreien und ungeschädigten NO$_x$-Speicherkatalysator aus einer Differenz der NO$_x$-Rohemission (RE) und der modellierten NO$_x$-Beladung (FSK$_{MOD}$) als eine Soll-Kenngröße berechnet wird.

11. Verfahren nach einem der vorhergehenden Ansprüche, **dadurch gekennzeichnet, dass** ein erster Gütefaktor (GFSK$_1$) das Verhältnis der ermittelten NO$_x$-Beladung (FSK$_{MES}$) des NO$_x$-Speicherkatalysators (16) und der modellierten NO$_x$-Beladung (FSK$_{MOD}$) ist.

12. Verfahren nach einem der vorhergehenden Ansprüche, **dadurch gekennzeichnet, dass** ein zweiter Gütefaktor (GFSK$_2$) des NO$_x$-Speicherkatalysators (16) das Verhältnis des modellierten NO$_x$-Durchbruches (EHK$_{MOD}$) zu dem gemessenen NO$_x$-Durchbruch (EHK$_{MES}$) ist.

13. Verfahren nach einem der vorhergehenden Ansprüche, **dadurch gekennzeichnet, dass** weitere Gütefaktoren des NO$_x$-Speicherkatalysators (16) das Verhältnis eines Quotienten aus gemessenem NO$_x$-Durchbruch (EHK$_{MES}$) und NO$_x$-Beladung (FSK$_{MES}$) zu einem Quotienten aus modelliertem NO$_x$-Durchbruch (EHK$_{MOD}$) und NO$_x$-Beladung (FSK$_{MOD}$) umfassen.

14. Verfahren nach einem der vorhergehenden Ansprüche, **dadurch gekennzeichnet, dass** die NO$_x$-Rohemission (EVK) anhand aktueller Betriebsparameter der Verbrennungskraftmaschine (10) berechnet oder gemessen wird.

15. Vorrichtung zur Ermittlung einer NO$_x$-Speicherkapazität eines in einem Abgaskanal (12) einer Verbrennungskraftmaschine (10) angeordneten NO$_x$-Speicherkatalysators (16) mit einer stromab des NO$_x$-Speicherkatalysators (16) angeordneten NO$_x$-empfindlichen Messeinrichtung (18), **dadurch gekennzeichnet, dass** Mittel vorgesehen sind, mit welchen die Verfahrensschritte Integration während der Daner einer Magerphase einer stromab des NO$_x$-Speicherkatalysators (16) gemessenen NO$_x$-Konzentration, Berechnung mindestens einer für die NO$_x$-Speicherkapazität des NO$_x$-Speicherkatalysators (16) kennzeichnenden Ist-Kenngröße in Abhängigkeit der integrierten NO$_x$-Konzentration und Vergleich der Ist-Kenngröße mit mindestens einer entsprechenden, für einen schwefelfreien und ungeschädigten NO$_x$-Speicherkatalysator modellierten Soll-Kenngröße ausführbar sind.

16. Vorrichtung nach Anspruch 15, **dadurch gekennzeichnet, dass** die Mittel eine Steuereinheit (20) umfassen, in der eine Prozedur zur Ermittlung einer NO$_x$-Speicherkapazität des NO$_x$-Speicherkatalysators (16) in digitaler Form hinterlegt ist.

17. Vorrichtung nach Anspruch 16, **dadurch gekennzeichnet, dass** die Steuereinheit (20) in ein Motorsteuergerät integriert ist.

## Claims

1. Method for determining an NO$_x$ storage capacity of an NO$_x$ storage catalyst (16) arranged in an exhaust-gas duct (12) of a combustion engine (10) with an NO$_x$-sensitive measuring device (18) disposed downstream of the NO$_x$ storage catalyst (16), wherein an NO$_x$ concentration measured downstream of the NO$_x$ storage catalyst (16) is integrated for the duration of a lean phase, **characterised in that,** at least one actual parameter **characterising** the NO$_x$ storage capacity of the NO$_x$ storage catalyst (16), which is the integrated NO$_x$ concentration and/or a value derived from the latter, is compared with at least one corresponding target parameter modelled for a sulfur-free and undamaged NO$_x$ storage catalyst.

2. Method according to claim 1, **characterised in that,** a quality factor (GFSK) of the NO$_x$ storage catalyst (16) is calculated from the relationship between the at least one actual parameter of the NO$_x$ storage catalyst (16) and the at least one modelled target parameter.

3. Method according to claim 2, **characterised in that** a desulfuring is triggered when the quality factor (GFSK) reaches a predeterminable threshold value.

4. Method according to any one of the preceding claims, **characterised in that** the integration of the $NO_x$ concentration after the $NO_x$ storage catalyst (16) begins with a start of a lean operating phase of the combustion engine (10).

5. Method according to claim 2, **characterised in that** the determination of the quality factor (GFSK) and the comparison with the threshold value (SW) takes place at the end of a lean operating phase of the combustion engine (10).

6. Method according to claim 5, **characterised in that** the determination of the quality factor (GFSK) and the comparison with the threshold value takes place at the end of a lean operating phase of combustion engine (10), only if an undisturbed $NO_x$ deposition was possible during the preceding lean phase.

7. Method according to any one of the preceding claims, **characterised in that,** as a first actual parameter of the $NO_x$ storage catalyst (16), an integral $NO_x$ breakthrough ($EHK_{MES}$) is calculated by integration of the $NO_x$ concentration measured downstream of the $NO_x$ storage catalyst.

8. Method according to any one of the preceding claims, **characterised in that,** as a second actual parameter, an $NO_x$ loading ($FSK_{MES}$) of the storage catalyst (16) is calculated from a difference between an $NO_x$ raw emission (RE) of the combustion engine (10) and the integral $NO_x$ breakthrough ($EHK_{MES}$).

9. Method according to any one of the preceding claims, **characterised in that** a modelled $NO_x$ loading ($FSK_{MOD}$) is calculated as a target parameter with reference to a theoretical loading model for a sulfur-free and undamaged $NO_x$ storage catalyst in dependence upon the $NO_x$ raw emission (RE) of the combustion engine (10).

10. Method according to any one of the preceding claims, **characterised in that** a modelled $NO_x$ breakthrough ($EHK_{MOD}$) for a sulfur-free and un-damaged $NO_x$ storage catalyst is calculated as a target parameter from a difference between the $NO_x$ raw emission (RE) and the modelled $NO_x$ loading ($FSK_{MOD}$).

11. Method according to any one of the preceding claims, **characterised in that** a first quality factor ($GFSK_1$) is the relationship between the measured $NO_x$ loading ($FSK_{MES}$) of the $No_x$ storage catalyst (16) and the modelled $NO_x$ loading ($FSK_{MOD}$).

12. Method according to any one of the preceding claims, **characterised in that** a second quality factor ($GFSK_2$) of the $NO_x$ storage catalyst (16) is the relationship between the modelled $NO_x$ break-through ($EHK_{MOD}$) and the measured $NO_x$ break-through ($EHK_{MES}$).

13. Method according to any one of the preceding claims, **characterised in that** further quality factors of the $NO_x$ storage catalyst (16) comprise the relationship between a quotient of the measured $NO_x$ breakthrough ($EHK_{MES}$) and $NO_x$ loading ($FSK_{MES}$), and a quotient of the modelled $NO_x$ breakthrough ($EHK_{MOD}$) and $NO_x$ loading ($FSK_{MOD}$).

14. Method according to any one of the preceding claims, **characterised in that** the raw emission (EVK) is calculated or measured on the basis of current operating parameters of the combustion engine (10).

15. Device for determining an $NO_x$ storage capacity of an $NO_x$ storage catalyst (16) arranged in an exhaust-gas duct (12) of a combustion engine (10) with an $NO_x$-sensitive measuring device (18) arranged downstream of the $NO_x$ storage catalyst (16), **characterised in that** means are provided for the implementation of the following procedural stages:

   integration of an $NO_x$ concentration measured downstream of the $NO_x$ storage catalyst (16) for the duration of a lean phase,
   calculation of at least one actual parameter **characterising** the $NO_x$ storage capacity of the $NO_x$ storage catalyst (16) in dependence upon the integrated $NO_x$ concentration and
   comparison of the actual parameter with at least one corresponding target parameter modelled for a sulfur-free and undamaged $NO_x$ storage catalyst.

16. Device according to claim 15, **characterised in that** the means comprise a control unit (20), in which a procedure for determining an $NO_x$ storage capacity of the $NO_x$ storage catalyst (16) is stored in digital form.

17. Device according to claim 16, **characterised in that** the control unit (20) is integrated in an engine control device.

**Revendications**

1. Procédé destiné à la détermination d'une capacité d'accumulation de $NO_x$ d'un catalyseur à accumulation de $NO_x$ (16) disposé dans un tuyau de gaz d'échappement (12) d'un moteur à combustion interne (10), avec un dispositif de mesure (18) sensible aux $NO_x$ disposé en aval du catalyseur à accumulation de $NO_x$ (16), une concentration en $NO_x$ mesurée en aval du catalyseur à accumulation de $NO_x$ (16) pendant la durée d'une phase de régime pauvre étant intégrée, **caractérisé en ce qu'**au moins une grandeur caractéristique réelle caractérisante pour la capacité d'accumulation de $NO_x$ du catalyseur à accumulation de $NO_x$ (16), qui est la concentration en $NO_x$ intégrée et/ou une grandeur dérivée de celle-ci, est comparée avec au moins une grandeur caractéristique de consigne modélisée correspondante pour un catalyseur à accumulation de $NO_x$ exempt de soufre et intact.

2. Procédé selon la revendication 1, **caractérisé en ce qu'**un facteur de qualité (GFSK) du catalyseur à accumulation de $NO_x$ (16) est calculé à partir d'un rapport de la, au moins une, grandeur caractéristique réelle du catalyseur à accumulation de $NO_x$ (16) et de la, au moins une, grandeur caractéristique de consigne modélisée.

3. Procédé selon la revendication 2, **caractérisé en ce qu'**une désulfuration est déclenchée par le facteur de qualité (GFSK) lorsqu'une valeur de seuil pouvant être prédéterminée est atteinte.

4. Procédé selon l'une quelconque des revendications précédentes, **caractérisé en ce que** l'intégration de la concentration en $NO_x$ en aval du catalyseur à accumulation de $NO_x$ (16) commence avec un début d'une phase de fonctionnement en régime pauvre du moteur à combustion interne (10).

5. Procédé selon la revendication 2, **caractérisé en ce que** la détermination du facteur de qualité (GFSK) et la comparaison avec la valeur de seuil (SW) sont effectuées à la fin d'une phase de fonctionnement en régime pauvre du moteur à combustion interne (10).

6. Procédé selon la revendication 5, **caractérisé en ce que** la détermination du facteur de qualité (GFSK) et la comparaison avec la valeur de seuil, à la fin d'une phase de fonctionnement en régime pauvre du moteur à combustion interne (10), ne sont effectuées que si une accumulation de $NO_x$ sans perturbations était possible dans la phase de régime pauvre précédente.

7. Procédé selon l'une quelconque des revendications précédentes, **caractérisé en ce qu'**une rupture intégrale de $NO_x$ ($EHK_{MES}$) est calculée par intégration de la concentration en $NO_x$ mesurée en aval du catalyseur à accumulation de $NO_x$ (16) en tant que première grandeur caractéristique réelle du catalyseur à accumulation de $NO_x$ (16).

8. Procédé selon l'une quelconque des revendications précédentes, **caractérisé en ce qu'**une charge en $NO_x$ ($FSK_{MES}$) du catalyseur à accumulation de $NO_x$ (16) est calculée à partir d'une différence d'une émission brute de $NO_x$ (RE) du moteur à combustion interne (10) et de la rupture intégrale de $NO_x$ ($EHK_{MES}$) en tant que deuxième grandeur caractéristique réelle.

9. Procédé selon l'une quelconque des revendications précédentes, **caractérisé en ce qu'**une charge en $NO_x$ modélisée ($FSK_{MOD}$) est calculée en tant que grandeur caractéristique réelle en fonction de l'émission brute de $NO_x$ (RE) du moteur à combustion interne (10) selon un modèle de charge théorique pour un catalyseur à accumulation de $NO_x$ exempt de soufre et intact.

10. Procédé selon l'une quelconque des revendications précédentes, **caractérisé en ce qu'**une rupture intégrale de $NO_x$ modélisée ($EHK_{MOD}$) pour un catalyseur à accumulation de $NO_x$ exempt de soufre et intact est calculée en tant que grandeur caractéristique de consigne à partir d'une différence de l'émission brute de $NO_x$ (RE) et de la charge en $NO_x$ modélisée ($FSK_{MOD}$).

11. Procédé selon l'une quelconque des revendications précédentes, **caractérisé en ce qu'**un premier facteur de qualité ($GFSK_1$) est le rapport de la charge en $NO_x$ ($FSK_{MES}$) déterminée du catalyseur à accumulation de $NO_x$ (16) à la charge en $NO_x$ modélisée ($FSK_{MOD}$).

12. Procédé selon l'une quelconque des revendications précédentes, **caractérisé en ce qu'**un deuxième facteur de qualité ($GFSK_2$) du catalyseur à accumulation de $NO_x$ (16) est le rapport de la rupture de $NO_x$ modélisée ($EHK_{MOD}$) et la rupture de $NO_x$ mesurée ($EHK_{MES}$).

13. Procédé selon l'une quelconque des revendications précédentes, **caractérisé en ce que** d'autres facteurs de qualité du catalyseur à accumulation de $NO_x$ (16) comprennent le rapport d'un quotient issu de la rupture de $NO_x$ mesurée ($EHK_{MES}$) et de la charge en $NO_x$ ($FSK_{MES}$) à un quotient issu de la rupture de $NO_x$ modélisée ($EHK_{MOD}$) et la charge en $NO_x$ ($FSK_{MOD}$).

14. Procédé selon l'une quelconque des revendications précédentes, **caractérisé en ce que** l'émission brute de NO$_x$ (EVK) est calculée ou mesurée à l'aide de paramètres de fonctionnement instantanés du moteur à combustion interne (10).

15. Dispositif destiné à la détermination de la capacité d'accumulation de NO$_x$ d'un catalyseur à accumulation de NO$_x$ (16) disposé dans un tuyau de gaz d'échappement (12) d'un moteur à combustion interne (10), avec un dispositif de mesure (18) sensible aux NO$_x$ disposé en aval du catalyseur à accumulation de NO$_x$ (16), **caractérisé en ce qu'**il est prévu des moyens avec lesquels peuvent être exécutées les phases de procédé : intégration d'une concentration en NO$_x$ mesurée en aval du catalyseur à accumulation de NO$_x$ (16) pendant la durée d'une phase de régime pauvre, calcul d'au moins une grandeur caractéristique réelle caractérisante pour la capacité d'accumulation de NO$_x$ du catalyseur à accumulation de NO$_x$ (16) en fonction de la concentration en NO$_x$ intégrée et comparaison de la grandeur caractéristique réelle avec au moins une grandeur caractéristique de consigne modélisée correspondante pour un catalyseur à accumulation de NO$_x$ exempt de soufre et intact.

16. Dispositif selon la revendication 15, **caractérisé en ce que** les moyens comportent une unité de commande (20), dans laquelle une procédure pour la détermination d'une capacité d'accumulation de NO$_x$ du catalyseur à accumulation de NO$_x$ (16) est mémorisée sous forme numérique.

17. Dispositif selon la revendication 16, **caractérisé en ce que** l'unité de commande (20) est intégrée dans un appareil de commande de moteur.

FIG. 1

$M_{NO_X}$

RE

$FSK_{MOD}$

$FSK_{MBS}$

$EHK_{MES}$

$EHK_{MOD}$

$t_0$          $t_1$   $t_2$          $t_3$   t

## FIG. 2

$M_{NO_X}$

$FSK_{MOD}$

$FSK_{MES}$

$M_1$   $R_1$   $M_2$   $R_2$   $M_3$   $R_3$   $M_4$   DS   $M_5$   t

## FIG. 3